# EUROPÄISCHE PATENTSCHRIFT

(11) **EP 0 641 099 B1**
(45) Veröffentlichungstag und Bekanntmachung des Hinweises auf die Patenterteilung: **13.02.2002**
(21) Anmeldenummer: 94113129.4
(22) Anmeldetag: 23.08.1994
(51) Int. Cl.: H04J 3/16

(54) **Verfahren und Vorrichtung zum Zwischenspeichern von Datenpaketen sowie Vermittlungsstelle mit einer solchen Vorrichtung**
Method and circuit for intermediate storage of data packets and a node having such circuit
Méthode et dispositif de mémorisation intermédiaire de paquets de données et noeud de commutation utilisant un tel dispositif

(30) Priorität: 27.08.1993 DE 4328862
(43) Veröffentlichungstag der Anmeldung: 01.03.1995
(73) Patentinhaber: ALCATEL, 75008 Paris (FR)
(72) Erfinder: Willmann, Gert, D-70184 Stuttgart (DE); Wippenbeck, Matthias, D-70193 Stuttgart (DE); Schrodi, Karl, D-71296 Heimsheim (DE)
(74) Vertreter: Brose, Gerhard, Dipl.-Ing.

(56) Entgegenhaltungen:
- EP-A- 0 171 596
- PROCEEDINGS IEEE GLOBAL TELECOMMUNICATIONS CONFERENCE, Bd.3, 27. November 1989, DALLAS (US) Seiten 1841 - 1845, XP91272 NORIMASA KUDOH ET AL. 'Experimental system for a private ATM network'
- COMPUTER NETWORKS AND ISDN SYSTEMS, Bd.20, 1990 Seiten 37 - 43, XP1722722 GERARD HEBUTERNE ET AL. 'A space priority queuing mechanism for multiplexing ATM channels.'
- PROCEEDINGS ON 11TH ANNUAL JOINT CONFERENCE OF THE IEEE COMPUTER AND COMMUNICATIONS SOCIETIES., Bd.1, 3. August 1992, FLORENCE (IT) Seiten 412 - 425, XP300074 ANWAR I. ELWALID ET AL. 'Fluid models for the analysis and design of statistical multiplexing with loss priorities on multiple classes of bursty traffic'
- Proceedings IEEE Infocom '90 - The Conference on Computer Communications. Ninth Annual Joint Conference of the IEEE Computer and Communications Societies, Los Alamitos, USA, Seiten 1136 - 1143, KRÖNER H 'Comparative Performance Studies of Space Priority Mechanisms in ATM Networks'

## Beschreibung

Die Erfindung betrifft ein Verfahren zum Zwischenspeichern von Datenpaketen nach dem Oberbegriff von Anspruch 1, eine Vorrichtung zum Zwischenspeichern von Datenpaketen nach dem Oberbegriff von Anspruch 7 sowie eine Vermittlungsstelle mit einer solchen Vorrichtung nach dem Oberbegriff von Anspruch 11.

Bei ATM-Vermittlungseinrichtungen (ATM=Asynchronous Transfer Mode) ist es oft notwendig, Datenpakete (dort auch Zellen genannt) von mehreren Eingangsleitungen auf ein und dieselbe Ausgangsleitung zu vermitteln. Dies ist einer der Gründe dafür, daß dort Datenpakete vor, während oder nach dem Vermittlungsvorgang zwischengespeichert werden. Dieses Zwischenspeichern kann in mehreren parallel angeordneten Warteschlangen erfolgen. Die Warteschlangen werden dabei unterschiedlich behandelt, wodurch sich eine unterschiedliche Abarbeitung der Datenpakete je nach ihrer Zugehörigkeit zu einer Warteschlange ergibt.

Die Erfindung geht nun von einer Vorrichtung aus, wie sie in dem Artikel "Experimental system for a private ATM network" von Norimasa Kudoh et al., Proceedings IEEE Global Telecommunications Coference, Bd. 3, 27. November 1989, Dallas (US), Seiten 1841 bis 1845 beschrieben ist.

Dort wird zur Prioritätskontrolle vorgeschlagen, im Ausgangspuffer einer ATM Übertragungs- und Vermittlungseinrichtung (ATX =ATM Transmission and Exchange) mehrere unabhängige Warteschlangen vorzusehen. Jedes Medium ist in Abhängigkeit von seiner Verzögerungs- und Verlustwahrscheinlichkeitspriorität einer von mehreren Dienstklassen zugeordnet. In jeder Warteschlange wird eine bestimmte Klasse von ATM Zellen gespeichert. Zur Steuerung der Verlustwahrscheinlichkeit wird eine zu verwerfende Zelle mittels Verlustprioritäten ausgewählt, wenn die Summe der Längen aller Warteschlangen eine vorgegeben Grenzwerte übersteigt.

Weiter wird auf den Seiten 162 und 163 des Artikels "Das ATM-Koppelfeld von Alcatel und seine Eigenschaften" aus der Zeitschrift "Elektrisches Nachrichtenwesen", Band 64, Nummer 2/3, die 1990 erschienen ist und von der Firma Alcatel herausgegeben wurde, folgende Vorrichtung beschrieben:

Bei dieser Vorrichtung handelt es sich um den Teil eines Koppelelements für ATM-Datenpakete (dort ATM-Zellen oder Zellen genannt). In dieser Vorrichtung werden Datenpakete, die von verschiedenen Eingängen stammen, einer von mehreren Warteschlangen zugeteilt und dort zwischengespeichert.

Sie weist eine Speichereinrichtung, eine Wegesucheinrichtung und eine Speicherverwaltungseinrichtung auf.

In der Speichereinrichtung sind mehrere logische Warteschlangen angelegt. "Logisch" bedeutet in diesem Zusammenhang, daß die Zuordnung von Speicherzellen zu einer Warteschlange nicht fest, sondern variabel ist.

Die Wegesucheinrichtung teilt ankommende Datenpakete aufgrund von in ihnen vermerkten Wegeinformationen einer der logischen Warteschlangen zu.

Die Speicherverwaltungseinrichtung verwaltet die Speicherplätze der Speichereinrichtung. Sie stellt die Warteschlangendisziplin in den logischen Warteschlangen sicher und teilt den Datenpaketen beim Einschreiben in die logischen Warteschlangen freie Speicherplätze zu.

Damit ergibt sich folgende Funktionsweise: Ein Strom von Datenpaketen kommt an der Speichereinrichtung an und wird aufgrund der Wegeinformation auf die logischen Warteschlangen verteilt und dort zwischengespeichert.

Eine solche Vorrichtung hat den Vorteil, daß die Datenpakete in verschiedenen Warteschlangen, die auf verschiedene Art und Weise abgearbeitet werden können, zwischengespeichert werden und daß dabei die Speicherplatzausnutzung besser als bei getrennten Warteschlangen mit einer festen Speicherplatzzuweisung ist. Dies resultiert daraus, daß alle Speicherplätze der Speichereinrichtung hier von allen Warteschlangen benutzt werden können.

Beim Auftreten von Überlastsituationen ist die Verlustwahrscheinlichkeit von Datenpaketen in der Regel unabhängig von ihrer Zugehörigkeit zu einer logischen Warteschlange. In vielen Fällen ist es jedoch notwendig, daß die Verlustwahrscheinlichkeit für die Datenpakete in einer bestimmten Warteschlange möglichst gering ist. Für Datenpakete einer anderen Warteschlange, die von geringerer Bedeutung ist, würde man dafür eine etwas höhere Verlustwahrscheinlichkeit in Kauf nehmen.

Der Erfindung liegt so die Aufgabe zugrunde, für Datenpakete, die in verschiedenen logischen Warteschlangen zwischengespeichert sind, eine unterschiedliche qualitative Behandlung zu erreichen.

Die Aufgabe wird gelöst durch ein Verfahren nach der Lehre des Anspruchs 1 sowie durch eine Vorrichtung nach der Lehre des Anspruchs 7. Eine vorteilhafte Anwendung ist dem Anspruch 11 zu entnehmen.

Der Grundgedanke der Erfindung ist, den unvermeidlichen Verlust von Datenpaketen durch gezieltes Verwerfen von Datenpaketen zu systematisieren. Datenpakete von Warteschlangen, die nicht so wichtig sind, werden innerhalb bestimmter Grenzen bewußt verworfen, um Platz für Datenpakete von größerer Wichtigkeit zu schaffen.

Vorteilhafte Ausgestaltungen der Erfindung sind den Unteransprüchen zu entnehmen.

Insbesondere werden Datenpakete aufgrund einer in ihnen vermerkten Prioritätsklasse den Warteschlangen so zugeteilt, daß jede Warteschlange Datenpakete einer anderen Prioritätsklasse enthält. Die Warteschlangen werden dabei mit unterschiedlicher Häufigkeit bedient. Damit wird auf vorteilhafte Weise ein Zwischenspeicher mit prioritätsabhängigen Verlust- und Verzögerungswahrscheinlichkeiten realisiert.

Der besondere Vorteil der Erfindung besteht hierbei darin, daß durch die Konfigurierung weniger Parameter zwischen mehreren Verfahren, die unterschiedliche Verlust- oder Verzögerungswahrscheinlichkeiten erwirken, umgeschaltet werden kann. Damit erhält man einen universell einsetzbaren Zwischenspeicher, der auf die jeweilige Aufgabenstellung durch die Konfigurierung weniger Parameter eingestellt wird.

Die Erfindung hat darüberhinaus den Vorteil, daß sie hohen Geschwindigkeitsanforderungen gerecht wird und so auch für ATM geeignet ist.

Im folgenden wird nun die Erfindung anhand eines Ausführungsbeispiels unter Zuhilfenahme der beiliegenden Zeichnungen erläutert.

Fig. 1 zeigt eine symbolische Darstellung einer erfindungsgemäßen Vorrichtung zum Zwischenspeichern von Datenpaketen, die nach dem erfindungsgemäßen Verfahren arbeitet.

Fig. 2 zeigt eine symbolische Darstellung eines Ausschnitts aus einer Einschreibeeinrichtung für die Vorrichtung nach Fig. 1.

Fig. 3 zeigt eine symbolische Darstellung einer Bedieneinrichtung und eines Ausschnitts aus einem Pufferspeicher für die Vorrichtung nach Fig. 1.

Zunächst wird die Anwendung des erfindungsgemäßen Verfahrens in einer erfindungsgemäßen Vorrichtung zum Zwischenspeichern von Datenpaketen aufgezeigt, bei der zwischen mehreren Betriebsarten der Bedien- und der Zugangskontrolleinrichtungen umgeschaltet werden kann. Die ankommenden Datenpakete sind dabei einer von zwei Prioritätsklassen zugeordnet und werden entsprechend ihrer Prioritätsklasse einer von zwei logischen Warteschlangen zugeteilt.

Es ist auch möglich, daß die ankommenden Datenpakete aufgrund eines anderen Kriteriums den Warteschlangen zugeteilt werden. So könnten die Datenpakete z.B. aufgrund einer in ihnen vermerkten Wegeinformation auf die Warteschlangen verteilt werden, wobei jeder Warteschlange auch ein anderer Ausgang zugeordnet werden kann.

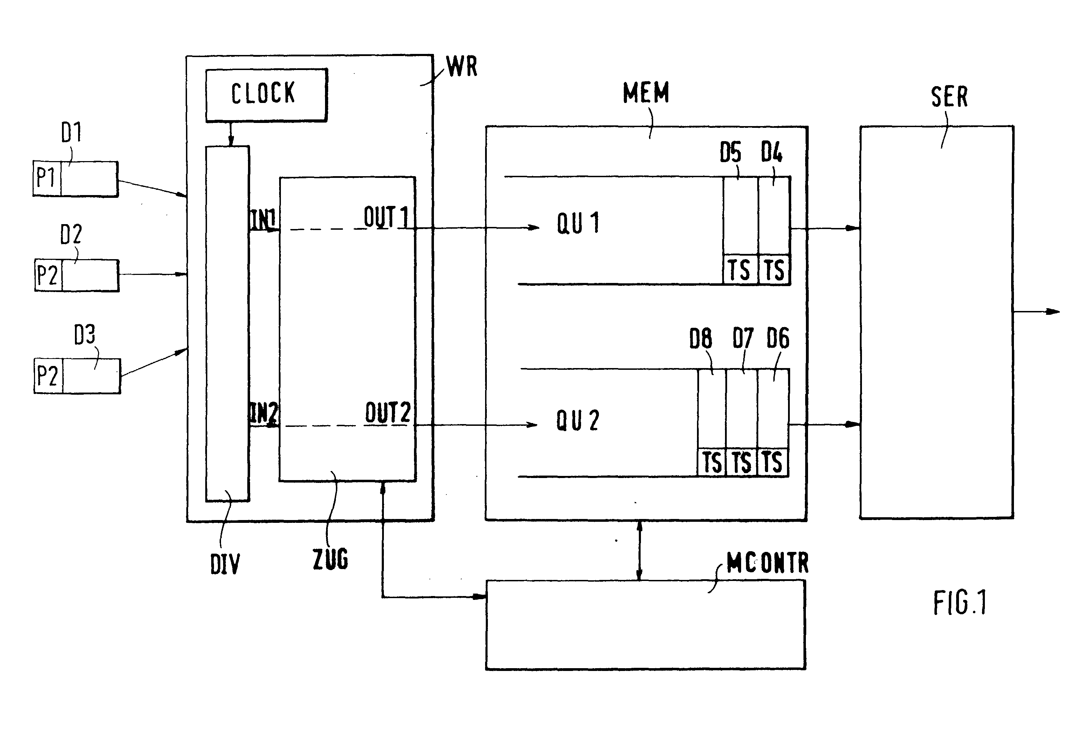

Fig. 1 zeigt eine Einschreibeeinrichtung WR, einen Pufferspeicher MEM, eine Bedieneinrichtung SER und eine Speicherverwaltungseinrichtung MCONTR. An der Einschreibeeinrichtung WR kommen drei Datenpakete D1, D2 und D3 an.

Die Datenpakete D1, D2 und D3 sind Datenpakete, wie sie in einem Kommunikationsnetz zum Austausch von Informationen verwendet werden. Sie tragen eine Kennung, die die Priorität angibt, der sie zugeordnet sind. Das Datenpaket D1 ist der Prioritätsklasse P1 und die Datenpakete D2 und D3 sind der Prioritätsklasse P2 zugewiesen. Hierbei entspricht P1 der höheren und P2 der niedrigeren Prioritätsklasse.

Es wäre auch möglich, daß die Datenpakete D1, D2 und D3 eine andere Form oder Verwendung hätten. So könnte z.B. ein solches Datenpaket den Prozeßkontext eines wartenden Prozesses in einer Datenverarbeitungsanlage darstellen.

Die Einschreibeeinrichtung WR empfängt ankommende Datenpakete, um sie in den Pufferspeicher MEM einzutragen. Zusätzlich entscheidet sie über das Verwerfen von Datenpaketen und tauscht zu diesem Zweck Signale mit der Speicherverwaltungseinrichtung MCONTR aus.

In dem Pufferspeicher MEM sind zwei logische Warteschlangen QU1 und QU2 angelegt. In der Warteschlange QU1 befinden sich zwei Datenpakete D4 und D5 und in der Warteschlange QU2 drei Datenpakete D6, D7 und D8. Jedes dieser Datenpakete ist mit einem Zeitstempel TS versehen, der Auskunft über die Ankunftsreihenfolge der Datenpakete gibt. Die Warteschlangen QU1 und QU2 sind als FIFO-Warteschlangen (FIFO=First In First Out) organisiert.

Es ist jedoch auch möglich, die Warteschlangen anders zu organisieren. Z.B. könnte dies so geschehen, daß kürzere Datenpakete zuerst ausgelesen werden.

Die Bedieneinrichtung SER liest Datenpakete, einem bestimmten Bedienalgorithmus folgend, aus dem Pufferspeicher MEM aus und gibt sie, z.B. an eine Sendeeinrichtung, weiter.

Die Speicherverwaltungseinrichtung MCONTR verwaltet den Speicherplatz im Pufferspeicher MEM. Hierfür verfügt sie über eine Liste derjenigen Speicherplätze des Pufferspeichers MEM, die frei sind. Sie teilt Speicherplätze aus dieser Liste Datenpaketen zu, wenn diese von der Einschreibeeinrichtung in eine der beiden Warteschlangen QU1 und QU2 eingetragen werden. Darüberhinaus organisiert sie die logischen Warteschlangen QU1 und QU2 und vermerkt deren aktuelle Längen sowie die Gesamtlänge beider Warteschlangen QU1 und QU2 in einem Register. Die Daten dieses Registers werden der Einschreibeeinrichtung WR mitgeteilt.

Wenn ein Datenpaket von der Bedieneinrichtung aus einer der logischen Warteschlangen QU1 und QU2 ausgelesen wird, so werden die von ihm belegten Speicherplätze in die Liste der freien Speicherplätze übernommen. In diesem Beispiel ist es auch möglich, daß die Speicherplätze eines Datenpakets auf ein Signal der Einleseeinrichtung WR hin von der Speicherverwaltungseinrichtung MCONTR in die Liste der freien Speicherplätze übernommen werden. Damit wird dieses Datenpaket aus der entsprechenden Warteschlange gelöscht.

Die Einschreibeeinrichtung WR weist einen Zeitgeber CLOCK, eine Aufteilungseinrichtung DIV und eine Zugangskontrolleinrichtung ZUG mit zwei Eingängen IN1 und IN2 und zwei Ausgängen OUT1 und OUT2 auf.

Die Aufteilungseinrichtung DIV empfängt die ankommenden Datenpakete D1, D2 und D3 und leitet sie, wenn sie der Prioritätsklasse P1 angehören, an den Eingang IN1 und wenn sie der Prioritätsklasse P2 angehören an den Eingang IN2 der Zugangskontrolleinrichtung ZUG weiter.

Darüberhinaus versieht die Aufteilungseinrichtung DIV die ankommenden Datenpakete mit einem Zeitstempel TS. Dieser Zeitstempel TS gibt den Ankuftszeitpunkt eines Datenpaketes an. Der Ankunftszeitpunkt wird dabei mittels des Zeitgebers CLOCK bestimmt.

Es sind auch andere Methoden, die Ankunftsreihenfolge der Datenpakete im Zeitstempel TS zu vermerken, denkbar. Z.B. könnte im Zeitstempel TS der Zählerstand eines Zählers, der bei jedem ankommenden Datenpaket um eins hochzählt, gespeichert werden. Der Zeitstempel könnte einem Datenpaket auch auf eine andere Art und Weise zugeordnet werden. So könnte er z.B. separat abgespeichert werden und von der Speicherverwaltungseinrichtung MCONTR mit dem entsprechenden Datenpaket verknüpft werden.

Es ist auch möglich, auf das Zuordnen eines Zeitstempels TS zu einem Datenpaket ganz zu verzichten. Die Information über die Ankunftsreihenfolge würde so für die Bedieneinrichtung SER jedoch nicht mehr zur Verfügung stehen.

Die Zugangskontrolleinrichtung ZUG trägt die Datenpakete, die an den Eingängen IN1 und IN2 anliegen, gegebenenfalls in die Warteschlange QU1 bzw. QU2 ein. Darüberhinaus trifft die Zugangskontrolleinrichtungen ZUG die Entscheidungen über das Verwerfen von Datenpaketen und führt das Verwerfen durch oder veranlaßt es. Hierfür tauscht sie mit der Speicherverwaltungseinrichtung MCONTR Signale aus.

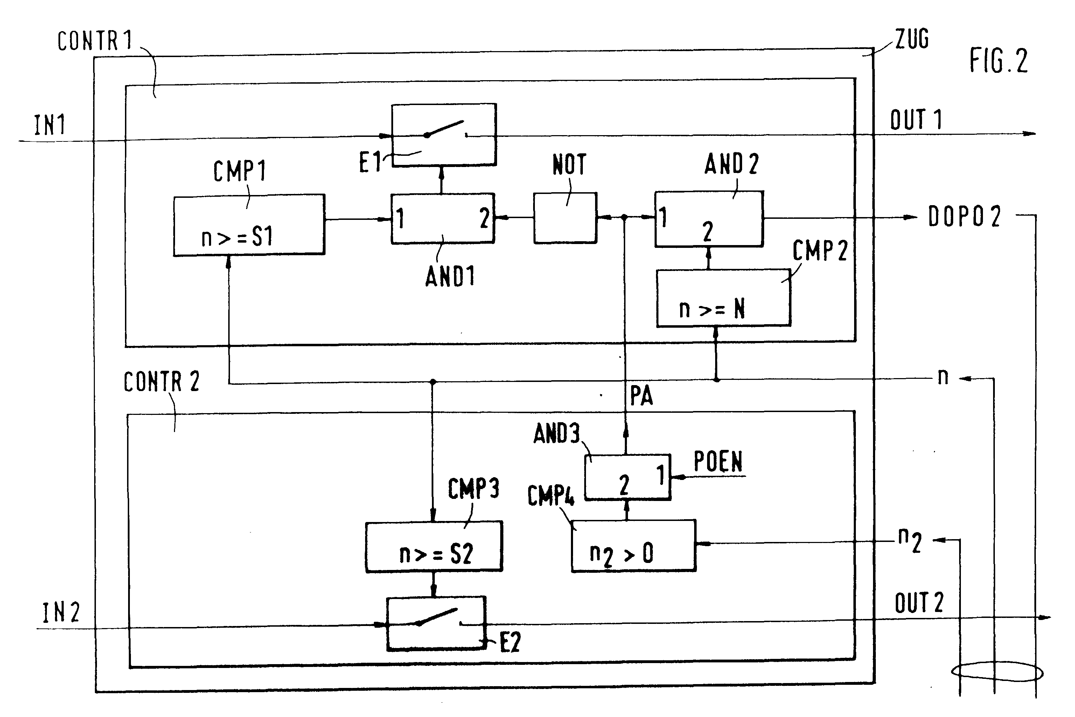

Die genaue Funktionsweise der Zugangskontrolleinrichtung ZUG wird in der Fig. 2 näher verdeutlicht.

Fig. 2 zeigt die Zugangskontrolleinrichtung ZUG mit den Eingängen IN1 und IN2 und den Ausgängen OUT1 und OUT2. Sie weist zwei Steuereinrichtungen CONTR1 und CONTR2 auf. Die Steuereinrichtung CONTR1 ist für diejenigen Datenpakete verantwortlich, die der Warteschlange QU1 zugewiesen werden und die Steuereinrichtung CONTR2 für diejenigen, die der Warteschlange QU2 zugewiesen werden.

Die Steuereinrichtung CONTR1 weist zwei Vergleicher CMP1 und CMP2, zwei Und-Verknüpfer AND1 und AND2, einen Negierer NOT und eine Einschreibeeinrichtung E1 auf. Die Steuereinrichtung CONTR2 weist zwei Vergleicher CMP3 und CMP4, einen Und-Verknüpfer AND3 und eine Einschreibeeinrichtung E2 auf.

Von der Speicherverwaltungseinrichtung MCONTR werden zwei Signale n und n₂ zur Verfügung gestellt, und an die Speicherverwaltungseinrichtung MCONTR wird ein Signal DOPO2 gesendet. Mittels eines Signals POEN wird die Beriebsart eingestellt, in der sich die Zugangskontrolleinrichtung ZUG befindet. Das Signal POEN stammt dabei z.B. von einem Schalter zur Wahl der Betriebsart oder von einer übergeordneten Steuerung.

Der Wert des Signals n₂ entspricht der Anzahl der Datenpakete in der Warteschlange QU2 und der Wert des Signals n dem der Gesamtzahl der Datenpakete in beiden Warteschlangen QU1 und QU2. Die Signale DOPO2 und POEN sind binäre Signale, deren Wert entweder eine logische "1" oder eine logische "0" ist.

Die Einschreibeeinrichtung E1 trägt ein am Eingang IN1 ankommendes Datenpaket entweder über den Ausgang OUT1 in die Warteschlange QU1 ein, oder verwirft es. Die Einschreibeeinrichtung E2 ist mit dem Eingang IN2 und mit dem Ausgang OUT2 verbunden und verfährt ebenso mit den Datenpaketen. Die Und-Verknüpfer AND1, AND2 und AND3 verfügen jeweils über zwei Eingänge und einen Ausgang.

Das Signal n liegt an den Vergleichern CMP1, CMP2 und CMP3, das Signal n₂ an dem Vergleicher CMP4 und das Signal POEN an dem ersten Eingang des Und-Verknüpfers AND3 an.

Im Vergleicher CMP3 wird der Wert des Signals n mit einem. Schwellenwert S2 verglichen. Wenn sein Wert größer oder gleich dem Schwellenwert S2 ist, so wird die Einschreibeeinrichtung E2 angewiesen, die an ihr ankommenden Datenpakete zu verwerfen. Ist dies nicht der Fall, so trägt sie diese Datenpakete über den Ausgang OUT2 in die Warteschlange QU2 ein.

Im Vergleicher CMP4 wird der Wert des Signals n₂ mit Null verglichen. Ist er größer als Null, so wird eine logische "1" an den zweiten Eingang des Und-Verknüpfers AND3 gelegt, sonst eine logische "0". Der Ausgang des Und-Verknüpfers AND3 (Signal PA) ist mit dem ersten Eingang des Und-Verknüpfers AND2 und über den Negierer NOT mit dem zweiten Eingang des Und-Verknüpfers AND1 verbunden.

Im Vergleicher CMP1 wird der Wert des Signals n mit dem Schwellenwert S1 und im Vergleicher CMP2 mit einem Schwellenwert N verglichen. Ist der Wert des Signals n größer oder gleich dem Schwellenwert S1, wird eine logische "1" an den ersten Eingang des Und-Verknüpfers AND1 gelegt, ansonsten eine logische "0". Ist er größer oder gleich dem Schwellenwert N, so wird eine logische "1" an den zweiten Eingang des Und-Verknüpfers AND2 angelegt, ansonsten ebenfalls eine logische "0".

Liegt an beiden Eingängen des Und-Verknüpfers AND1 eine logische "1" an, so wird die Einschreibeeinrichtung E1 angewiesen, die an ihr ankommenden Datenpakete zu verwerfen. Ist dies nicht der Fall, so trägt sie diese Datenpakete über den Ausgang OUT1 in die Warteschlange QU1 ein. Liegt an beiden Eingängen des Und-Verknüpfers AND2 eine logische "1" an, so wird die Speicherverwaltungseinrichtung MCONTR über das Signal DOPO2 angewiesen, dasjenige Datenpaket, das sich am Ende der Warteschlange QU2 findet, aus dem Pufferspeicher MEM zu löschen.

Die Schwellenwerte S1 und N werden auf einen Wert gesetzt, der der maximalen Anzahl von Datenpaketen entspricht, die im Pufferspeicher MEM abgelegt werden können. Bei einer Erweiterung der Zugangskontrolleinrichtung ZUG auf mehr als zwei Prioritätsklassen müßte der Schwellwert S1 jedoch auf einen niedrigeren Wert gesetzt werden.

Durch die oben beschriebene Verschaltung kann zwischen zwei verschiedenen Betriebsarten umgeschaltet werden:

Ist der Wert des Signals POEN auf eine logische "0" gesetzt, so werden ab einer bestimmten Gesamtlänge der beiden Warteschlangen QU1 und QU2 nur noch Datenpakete, die für die Warteschlange QU1 der hohen Prioritätsklasse P1 bestimmt sind, in den Pufferspeicher MEM eingetragen. Die für die Warteschlange QU2 bestimmten Datenpakete werden verworfen. Diese Schwelle der Gesamtlänge wird dabei über den Schwellenwert S2 eingestellt.

Wird der Wert des Signals POEN auf eine logische "1" und der Schwellenwert S2 auf denselben Wert wie die Schwellenwerte N und S1 gesetzt, so wird, wenn die Gesamtlänge der beiden Warteschlangen QU1 und QU2 die Grenze der Speicherkapazität des Pufferspeichers MEM erreicht hat und in der Warteschlange QU2 der niedrigeren Prioritätsklasse P2 noch Datenpakete abgelegt sind, ein Datenpaket aus der Warteschlange QU1 gelöscht und der freiwerdende Speicherplatz für die Abspeicherung eines Datenpakets der hohen Prioritätsklasse P1 in der Warteschlange QU1 verwendet.

Es ist auch möglich, auf die Umschaltemöglichkeit zwischen zwei Betriebsarten zu verzichten und nur eine der beiden Betriebsarten zu realisieren.

Auch die Verwendung von anderen Verfahren, die mittels der Daten von der Speicherverwaltungseinrichtung MCONTR und der Zuordnung der Datenpakete zu einer Warteschlange Datenpakete gezielt verwerfen, ist denkbar. Solche Verfahren könnten zum Beispiel durch eine entsprechende andere Einstellung der Schwellenwerte N, S1 oder S2 oder des Signals POEN realisiert werden. Es könnte auch zwischen mehr als zwei Betriebsarten umgeschaltet werden.

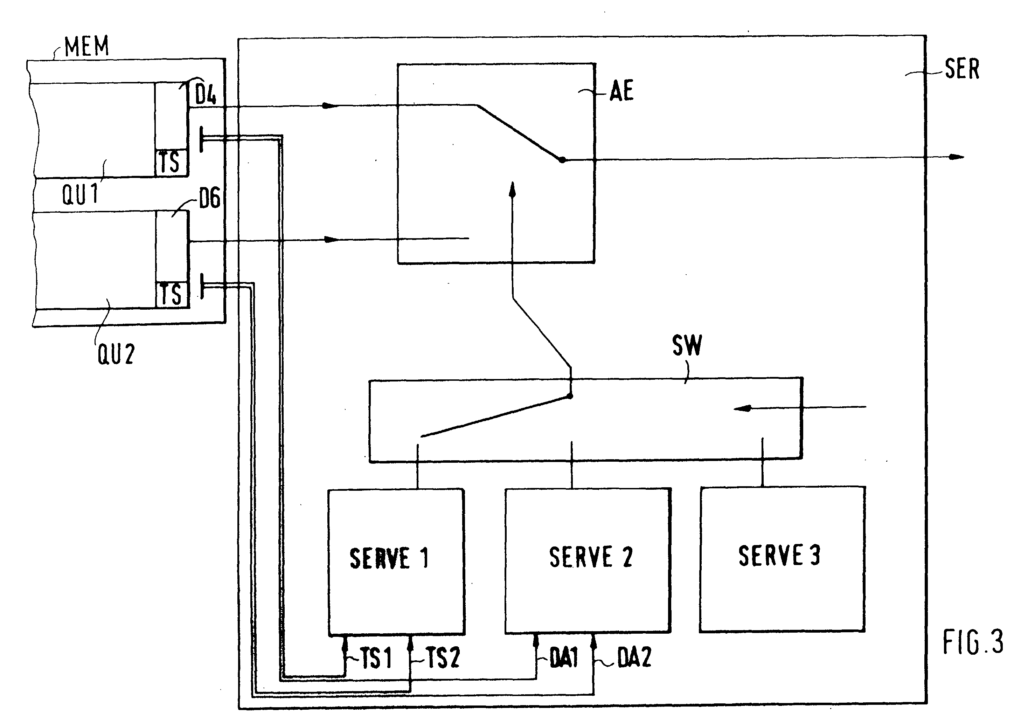

In Fig. 3 wird die Funktion der Bedieneinrichtung SER näher verdeutlicht.

Fig. 3 zeigt einen Ausschnitt des Pufferspeichers MEM und die Bedieneinrichtung SER. Der Pufferspeicher MEM weist zwei logische Warteschlangen QU1 und QU2 auf und enthält zwei Datenpakete D4 und D6, die an vorderster Stelle der Warteschlangen QU1 bzw. QU2 abgelegt sind. Die Bedieneinrichtung SER weist eine Ausleseeinrichtung AE, eine Schalteinrichtung SW und drei Steuereinrichtungen SERVE1, SERVE2 und SERVE3 auf.

Die Ausleseeinrichtung AE entnimmt entweder ein Datenpaket vom Anfang der Warteschlange QU1 oder von dem der Warteschlange QU2 und gibt es weiter. Von welcher Warteschlange ein Datenpaket entnommen wird, wird von einer der drei Steuereinrichtungen SERVE1, SERVE2 und SERVE3 entschieden. Durch Auswahl einer dieser drei Steuereinrichtungen mittels der Schalteinrichtung SW wird eine von drei Betriebsarten eingestellt. Jeder Betriebsart entspricht hierbei ein anderes Bedienverfahren.

In der ersten Betriebsart frägt die Steuereinrichtung SERVE1 über einen Eingang TS1 den Zeitstempel TS des Datenpaketes D4 und über einen Eingang TS2 den des Datenpaketes D6 ab. Mittels dieser Daten veranlaßt sie dann, daß dasjenige der beiden Datenpakete D4 und D6 von der Ausleseeinrichtung AE ausgelesen wird, das früher an der Einschreibeeinrichtung WR angekommen ist. Damit wird eine FIFO-Abarbeitung aller Datenpakete realisiert.

In der zweiten Betriebsart prüft die Steuereinrichtung SERVE2 über zwei Eingänge DA1 und DA2, ob sich mindestens ein Datenpaket in der Warteschlange QU1 bzw. QU2 befindet. Mittels dieser Daten veranlaßt sie dann, daß Datenpakete nur dann aus der Warteschlange QU2 ausgelesen werden, wenn sich keine Datenpakete mehr in der Warteschlange QU1 befinden. Damit wird eine Verzögerungs-Priorität (delay priority) der Datenpakete der höheren Prioritätsklasse P1 realisiert.

In der dritten Betriebsart weist die Steuereinrichtung SERVE3 die Ausleseeinrichtung AE an, jede Warteschlange für eine bestimmte Zeitdauer auszulesen. Damit wird eine zyklische Abarbeitung der beiden Warteschlangen erreicht.

Es ist auch möglich, auf die Umschaltemöglichkeit zwischen mehreren Betriebsarten der Bedieneinrichtung SER zu verzichten und nur eine Betriebsart zu verwenden oder andere als die oben beschriebenen Bedienverfahren anzuwenden.

In dem beschriebenen Beispiel wird eine erfindungsgemäße Vorrichtung zum Zwischenspeichern von Datenpaketen, die einer von zwei Prioriätsklassen angehören, aufgezeigt. Diese Vorrichtung könnte auch für die Zwischenspeicherung von Datenpaketen, die einer von mehr als zwei Prioritätsklassen zugeordnet sind, ausgebaut werden. Hierfür müßte für jede zusätzliche Prioritätsklasse im Pufferspeicher MEM eine zusätzliche Warteschlange angelegt werden und in der Zugangskontrolleinrichtung eine zusätzliche Steuereinrichtung eingefügt werden. Diese zusätzliche Steuereinrichtung wäre dann wie die Steuereinrichtung CONTR1 aufgebaut und wäre einer höheren Prioritätsklasse als der Prioritätsklasse P1 zugeordnet. Es müßte darüberhinaus noch eine zusätzliche Schaltung hinzugefügt werden, die ein dem Signal PA entsprechendes Signal für die zusätzliche Steuereinrichtung und für die Steuereinrichtung CONTR1 aus den Signalen POEN und n₂ und einem Signal erzeugt, dessen Wert die Länge der Warteschlange QU1 angibt.

Im folgenden wird eine vorteilhafte Anwendung der Erfindung in einer ATM-Vermittlungsstelle aufgezeigt.

In einer solchen Vermittlungsstelle werden die ankommenden Datenpakete bevor, während oder nachdem sie durch eine Koppeleinrichtung vermittelt werden, zwischengespeichert. Damit wird für jede Leitung, auf der Datenpakete ankommen oder abgehen, oder bei der Vermittlung ein Zwischenspeicher benötigt. An diesen Stellen werden nun erfindungsgemäße Vorrichtungen zum Zwischenspeichern von Datenpaketen eingesetzt.

## Patentansprüche

1. Verfahren zum Zwischenspeichern von Datenpaketen, bei dem die ankommenden Datenpakete (D1, D2, D3) aufgrund von in ihnen vermerkten Daten (P1, P2) auf mehrere logische Warteschlangen (QU1, QU2) verteilt und dort zwischengespeichert werden, bei dem die Gesamtlänge (n) aller logischen Warteschlangen (QU1, QU2) ermittelt wird und Daten darüber ermittelt werden, welcher logischen Warteschlange ein ankommendes Datenpaket (D1, D2, D3) zugeteilt wird, und bei dem einzelne Datenpakete verworfen werden, wenn nicht für alle Datenpakete eine ordnungsgemäße Behandlung gewährleistet ist,
**dadurch gekennzeichnet, daß** sich alle diese logischen Warteschlangen (QU1, QU2) einen gemeinsamen Pufferspeicher (MEM) teilen, dessen Speicherplätze erst bei Bedarf dynamisch den einzelnen logischen Warteschlangen (QU1, QU2) zugeordnet werden, daß jeder logischen Warteschlange ein Vergleichswert (S1, S2) zugeordnet wird, daß die ermittelte Gesamtlänge (n) aller logischen Warteschlangen (QU1, QU2) mit jedem der den logischen Warteschlangen (QU1, QU2) zugeordneten Vergleichswerte (S1, S2) verglichen wird und daß die zu verwerfenden Datenpakete (D1, D2, D3) aufgrund der Ergebnisse dieser Vergleiche und der ermittelten Daten über die Zuteilung von Datenpaketen (D1, D2, D3) zu logischen Warteschlangen ausgewählt werden.

2. Verfahren nach Anspruch 1,
**dadurch gekennzeichnet, daß** zu verwerfende Datenpakete verworfen werden, bevor sie in eine logische Warteschlange (QU1, QU2) eingetragen werden.

3. Verfahren nach Anspruch 1,
**dadurch gekennzeichnet, daß** zu verwerfende Datenpakete aus einer logischen Warteschlange (QU1, QU2) entfernt werden.

4. Verfahren nach Anspruch 1,
**dadurch gekennzeichnet, daß** in jedem Datenpaket Daten (P1, P2), die diesem Datenpaket eine Prioritätsklasse zuordnen, vermerkt sind, und daß für jede Prioritätsklasse eine eigene logische Warteschlange (QU1, QU2) vorgesehen ist, in der die dieser Prioritätsklasse zugeordneten Datenpakete (D5, D4; D8, D7, D6) zwischengespeichert werden.

5. Verfahren nach Anspruch 1,
**dadurch gekennzeichnet, daß** ankommende Datenpakete (D1, D2, D3) verworfen werden, wenn die Gesamtlänge (n) der logischen Warteschlangen (QU1, QU2) denjenigen Vergleichswert (S1, S2) übersteigt, der derjenigen logischen Warteschlangen (QU1, QU2) zugeordnet ist, der das ankommenden Datenpaket (D1, D2, D3) zugeteilt wird.

6. Verfahren nach Anspruch 1,
**dadurch gekennzeichnet, daß** Daten (n₂) über die Länge einer der logischen Warteschlagen ermittelt werden und daß die zu verwerfenden Datenpakete (D1, D2, D3) zusätzlich aufgrund dieser ermittelten Daten ausgewählt werden.

7. Vorrichtung zum Zwischenspeichern von Datenpaketen, mit einem Pufferspeicher (MEM), in dem mehrere logische Warteschlangen (QU1, QU2) zum Zwischenspeichern der Datenpakete angelegt sind, mit einer Einschreibeeinrichtung (WR), die so ausgestaltet ist, daß sie ein ankommendes Datenpaket (D1, D2, D3) aufgrund von in ihm vermerkten Daten (P1, P2) in eine der logischen Warteschlangen (QU1, QU2) einträgt, und mit einer Bedieneinrichtung (SER) zum Auslesen von Datenpaketen aus den logischen Warteschlangen (QU1, QU2),
**dadurch gekennzeichnet, daß** die Vorrichtung mit einer Speicherverwaltungseinrichtung (MCONTR) zum Verwalten der logischen Warteschlangen (QU1, QU2) versehen ist, die so ausgestaltet ist, daß sie Speicherplätze erst bei Bedarf dynamisch den einzelnen logischen Warteschlangen (QU1, QU2) zuordnet, daß die Speicherverwaltungseinrichtung (MCONTR) mit einer Einrichtung zum Ermitteln der Gesamtlänge (n) aller logischen Warteschlangen (QU1, QU2) (QU1, QU2) versehen ist und daß die Einschreibeeinrichtung (WR) mit einer Zugangskontrolleinrichtung (ZUG) zum Verwerfen von Datenpaketen versehen ist, die so ausgestaltet ist, daß jeder logischen Warteschlange ein Vergleichswert (S1, S2) zugeordnet ist und daß die ermittelte Gesamtlänge (n) aller logischen Warteschlangen (QU1, QU2) mit jedem der den logischen Warteschlangen (QU1, QU2) zugeordneten Vergleichswerte (S1, S2) verglichen wird, und daß die Zugangskontrolleinrichtung (ZUG) weiter so ausgestaltet ist, daß sie für die Entscheidung über das Verwerfen von Datenpaketen die Ergebnisse dieser Vergleiche mit Daten verknüpft, die Auskunft darüber geben, welcher logischen Warteschlange (QU1, QU2) ein ankommendes Datenpaket (D1, D2, D3) zugeteilt wird.

8. Vorrichtung nach Anspruch 7,
**dadurch gekennzeichnet, daß** die Einleseeinrichtung (WR) mit einer Einrichtung (DIV) zum Zuordnen eines Zeitstempels (TS) zu jedem ankommenden Datenpaket (D1, D2, D3) versehen ist, und daß die Bedieneinrichtung (SER) so ausgestaltet ist, daß die Reihenfolge, in der die logischen Warteschlangen (QU1, QU2) beim Auslesen bedient werden, durch die Zeitstempel (TS) beeinflußt werden kann.

9. Vorrichtung nach Anspruch 7,
**dadurch gekennzeichnet, daß** die Bedieneinrichtung (SER) so ausgestaltet ist, daß zwischen mehreren Betriebsarten, die die Bedienreihenfolge der einzelnen Warteschlangen festlegen, umgeschaltet werden kann.

10. Vorrichtung nach Anspruch 7,
**dadurch gekennzeichnet, daß** die Zugangskontrolleinrichtung (ZUG) so ausgestaltet ist, daß zwischen mindestens zwei Betriebsarten, die das Verwerfen von Datenpaketen betreffen, umgeschaltet werden kann.

11. Vermittlungsstelle für ein Kommunikationsnetz zum Transportieren von Datenpaketen, mit mindestens einer Vorrichtung zum Zwischenspeichern von Datenpaketen, die mit einem Pufferspeicher (MEM), in dem mehrere logische Warteschlangen (QU1, QU2) zum Zwischenspeichern der Datenpakete angelegt sind, mit einer Einschreibeeinrichtung (WR), die so ausgestaltet ist, daß sie ein ankommendes Datenpaket (D1, D2, D3) aufgrund von in ihm vermerkten Daten (P1, P2) in eine der logischen Warteschlangen (QU1, QU2) einträgt, und mit einer Bedieneinrichtung (SER) zum Auslesen von Datenpaketen aus den logischen Warteschlangen (QU1, QU2) versehen ist,
**dadurch gekennzeichnet, daß** die Vorrichtung mit einer Speicherverwaltungseinrichtung (MCONTR) zum Verwalten der logischen Warteschlangen (QU1, QU2) versehen ist, die so ausgestaltet ist, daß sie Speicherplätze erst bei Bedarf dynamisch den einzelnen logischen Warteschlangen (QU1, QU2) zuordnet, daß die Speicherverwaltungseinrichtung (MCONTR) mit einer Einrichtung zum Ermitteln der Gesamtlänge (n) aller logischen Warteschlangen (QU1, QU2) (QU1, QU2) versehen ist und daß die Einschreibeeinrichtung (WR) mit einer Zugangskontrolleinrichtung (ZUG) zum Verwerfen von Datenpaketen versehen ist, die so ausgestaltet ist, daß jeder logischen Warteschlange ein Vergleichswert (S1, S2) zugeordnet ist und daß die ermittelte Gesamtlänge (n) aller logischen Warteschlangen (QU1, QU2) mit jedem der den logischen Warteschlangen (QU1, QU2) zugeordneten Vergleichswerte (S1, S2) verglichen wird, und daß die Zugangskontrolleinrichtung (ZUG) weiter so ausgestaltet ist, daß sie für die Entscheidung über das Verwerfen von Datenpaketen die Ergebnisse dieser Vergleiche mit Daten verknüpft, die Auskunft darüber geben, welcher logischen Warteschlange (QU1, QU2) ein ankommendes Datenpaket (D1, D2, D3) zugeteilt wird.

## Claims

1. Method for the intermediate storage of data packets, wherein the incoming data packets (D1, D2, D3) are distributed to and intermediately stored in several logical queues (QU1, QU2) on the basis of data (P1, P2) recorded in them, wherein the overall length (n) of all logical queues (QU1, QU2) is determined and data is determined concerning to which logical queue an incoming data packet (D1, D2, D3) is allocated, and wherein individual data packets are rejected if proper treatment is not ensured for all data packets, **characterized in that** all of these logical queues (QU1, QU2) share a common buffer memory (MEM) whose memory locations are dynamically assigned to the individual logical queues (QU1, QU2) only when required, that a reference value (S1, S2) is assigned to each logical queue, that the determined overall length (n) of all logical queues (QU1, QU2) is compared with each of the reference values (S1, S2) assigned to the logical queues (QU1, QU2) and that the data packets (D1, D2, D3) to be rejected are selected on the basis of the results of these comparisons and on the basis of the determined data on the allocation of data packets (D1, D2, D3) to logical queues.

2. Method according to Claim 1, **characterized in that** data packets to be rejected are rejected before they are entered into a logical queue (QU1, QU2).

3. Method according to Claim 1, **characterized in that** data packets to be rejected are removed for a logical queue (QU1, QU2).

4. Method according to Claim 1, **characterized in that** there is recorded in each data packet data (P1, P2) which assigns a priority class to this data packet, and that for each priority class, a separate logical queue (QU1, QU2) is provided in which the data packets (D5, D4; D8, D7, D6) assigned to this priority class are intermediately stored.

5. Method according to Claim 1, **characterized in that** incoming data packets (D1, D2, D3) are rejected if the overall length (n) of the logical queues (QU1, QU2) exceeds that reference value (S1, S2) which is assigned to that logical queue (QU1, QU2) to which the incoming data packet (D1, D2, D3) is allocated.

6. Method according to Claim 1, **characterized in that** data (n₂) on the length of one of the logical queues is determined and that the data packets (D1, D2, D3) to be rejected are additionally selected on the basis of this determined data.

7. Facility for the intermediate storage of data packets, with a buffer memory (MEM) in which several logical queues (QU1, QU2) are formed for the intermediate storage of the data packets, with a write device (WR) which is designed to enter an incoming data packet (D1, D2, D3) into one of the logical queues (QU1, QU2) on the basis of data (P1, P2) recorded in the said data packet, and with a server (SER) for reading out data packets from the logical queues (QU1, QU2), **characterized in that** the facility is provided with a memory management device (MCONTR) for managing the logical queues (QU1, QU2) which is designed to dynamically assign memory locations to the individual logic queues (QU1, QU2) only when required, that the memory management device (MCONTR) is provided with a device for determining the overall length (n) of all logical queues (QU1, QU2) and that the write device (WR) is provided with an access control device (ZUG) for rejecting data packets which is designed so that a reference value (S1, S2) is assigned to each logical queue and that the determined overall length (n) of all logical queues (QU1, QU2) is compared with each of the reference values (S1, S2) assigned to the logical queues (QU1, QU2), and that the access control device (ZUG) is further designed, for the decision on the rejection of data packets, to link the results of these comparisons with data which indicates to which logical queue (QU1, QU2) an incoming data packet (D1, D2, D3) is allocated.

8. Facility according to Claim 7, **characterized in that** the write device (WR) is provided with a device (DIV) for assigning a time stamp (TS) to each incoming data packet (D1, D2, D3), and that the server (SER) is designed so that the sequence in which the logical queues (QU1, QU2) are serviced during read-out can be influenced by the time stamps (TS).

9. Facility according to Claim 7, **characterized in that** the server (SER) is designed so that it is possible to switch between several operating modes which determine the sequence in which the individual queues are serviced.

10. Device according to Claim 7, **characterized in that** the access control device (ZUG) is designed so that it is possible to switch between at least two operating modes which relate to the rejection of data packets.

11. Switching centre for a communication network for the transportation of data packets, with at least one facility for the intermediate storage of data packets which is provided with a buffer memory (MEM) in which are formed several logical queues (QU1, QU2) for the intermediate storage of the data packets, with a write device (WR) which is designed to enter an incoming data packet (D1, D2, D3) into one of the logical queues (QU1, QU2) on the basis of data (P1, P2) recorded in the said data packet, and with a server (SER) for reading out data packets from the logical queues (QU1, QU2), **characterized in that** the facility is provided with a memory management device (MCONTR) for managing the logical queues (QU1, QU2) which is designed to dynamically assign memory locations to the individual logic queues (QU1, QU2) only when required, that the memory management device (MCONTR) is provided with a device for determining the overall length (n) of all logical queues (QU1, QU2) and that the write device (WR) is provided with an access control device (ZUG) for rejecting data packets which is designed so that a reference value (S1, S2) is assigned to each logical queue and that the determined overall length (n) of all logical queues (QU1, QU2) is compared with each of the reference values (S1, S2) assigned to the logical queues (QU1, QU2), and that the access control device (ZUG) is further designed, for the decision on the rejection of data packets, to link the results of these comparisons with data which indicates to which logical queue (QU1, QU2) an incoming data packet (D1, D2, D3) is allocated.

## Revendications

1. Méthode de mémorisation intermédiaire des paquets de données, avec laquelle les paquets de données arrivants (D1, D2, D3) sont répartis sur plusieurs files d'attente logiques (QU1, QU2) en fonction des données (P1, P2) qu'ils contiennent et y font l'objet d'une mémorisation intermédiaire, avec laquelle la longueur totale (n) de toutes les files d'attente logiques (QU1, QU2) est déterminée et qui détermine des informations permettant de déterminer la file d'attente logique (QU1, QU2) à laquelle est affecté un paquet de données arrivant (D1, D2, D3) et avec laquelle des paquets de données individuels sont rejetés si un traitement correct n'est pas assuré pour tous les paquets de données,
**caractérisée en ce que** toutes ces files d'attente logiques (QU1, QU2) partagent une mémoire tampon commune (MEM) dont les cases mémoire sont affectées de manière dynamique à chacune des files d'attente (QU1, QU2) en fonction du besoin, qu'une valeur de comparaison (S1, S2) est affectée à chacune des files d'attente logiques (QU1, QU2), que la longueur totale (n) déterminée de toutes les files d'attente logiques (QU1, QU2) est comparée avec les valeurs de comparaison (S1, S2) affectées à chacune des files d'attente logiques (QU1, QU2) et que les paquets de données à rejeter (D1, D2, D3) sont sélectionnés en fonction des résultats de ces comparaisons et des informations déterminées sur l'affectation des paquets de données (D1, D2, D3) aux files d'attente logiques.

2. Méthode selon la revendication 1, **caractérisé en ce que** les paquets de données à rejeter sont rejetés avant qu'ils soient insérés dans une file d'attente logique (QU1, QU2).

3. Méthode selon la revendication 1, **caractérisé en ce que** les paquets de données à rejeter sont supprimés d'une file d'attente logique (QU1, QU2).

4. Méthode selon la revendication 1, **caractérisé en ce que** chaque paquet de données contient des données (P1, P2) qui affectent à ce paquet de données une classe de priorité et que pour chaque classe de priorité est prévue une file d'attente logique propre (QU1, QU2) dans laquelle sont mémorisés temporairement les paquets de données (D5, D4 ; D8, D7, D6) associés à cette classe de priorité.

5. Méthode selon la revendication 1, **caractérisé en ce que** les paquets de données arrivants (D1, D2, D3) sont rejetés lorsque la longueur totale (n) des files d'attente logiques (QU1, QU2) dépasse la valeur de comparaison (S1, S2) qui est affectée à la file d'attente logique (QU1, QU2) à laquelle est affecté le paquet de données arrivant (D1, D2, D3).

6. Méthode selon la revendication 1, **caractérisé en ce que** des informations (n₂) sur la longueur de l'une des files d'attente logiques sont déterminées et que les paquets de données à rejeter (D1, D2, D3) sont en plus sélectionnés en fonction de ces informations déterminées.

7. Dispositif de mémorisation intermédiaire de paquets de données, comportant une mémoire tampon (MEM) dans laquelle sont créées plusieurs files d'attente logiques (QU1, QU2) pour la mémorisation intermédiaire de paquets de données, comportant un dispositif d'écriture (WR) qui est conçu de manière à insérer un paquet de données arrivant (D1, D2, D3) dans l'une des files d'attente logiques (QU1, QU2) en fonction des informations (P1, P2) qui le caractérisent et comportant un serveur (SER) pour extraire les paquets de données des files d'attente logiques (QU1, QU2),
**caractérisé en ce que** le dispositif est muni d'un dispositif de gestion de la mémoire (MCONTR) destiné à gérer les files d'attente logiques (QU1, QU2), lequel est conçu de manière à affecter les cases mémoire à chacune des files d'attente logiques (QU1, QU2) de manière dynamique seulement en cas de besoin, que le dispositif de gestion de la mémoire (MCONTR) est muni d'un dispositif destiné à déterminer la longueur totale (n) de toutes les files d'attente logiques (QU1, QU2) et que le dispositif d'écriture (WR) est muni d'un dispositif de contrôle d'accès (ZUG) destiné à rejeter les paquets de données, lequel est conçu de manière à ce qu'une valeur de comparaison (S1, S2) soit affectée à chaque file d'attente logique et que la longueur totale (n) déterminée de toutes les files d'attente logiques (QU1, QU2) est comparée avec les valeurs de comparaison (S1, S2) affectées à chacune des files d'attente logiques (QU1, QU2), et que le dispositif de contrôle d'accès (ZUG) est en outre conçu de telle manière que pour prendre la décision du rejet des paquets de données il lie les résultats de ces comparaison avec des données qui fournissent une information sur la file d'attente logique (QU1, QU2) à laquelle est affecté un paquet de données arrivant (D1, D2, D3).

8. Dispositif selon la revendication 7, **caractérisé en ce que** le dispositif d'écriture (WR) est muni d'un dispositif (DIV) destiné à affecter une étiquette de temps (TS) à chaque paquet de données arrivant (D1, D2, D3) et que le serveur (SER) est conçu de manière à ce que l'ordre dans lequel sont sollicitées les files d'attente logiques (QU1, QU2) lors de l'extraction peut être influencé par l'étiquette de temps (TS) .

9. Dispositif selon la revendication 7, **caractérisé en ce que** le serveur (SER) est conçu de manière à ce qu'il soit possible de basculer entre plusieurs modes de fonctionnement qui déterminent l'ordre de sollicitation de chacune des files d'attente.

10. Dispositif selon la revendication 7, **caractérisé en ce que** le dispositif de contrôle d'accès (ZUG) est conçu de manière à ce qu'il soit possible de basculer entre au moins deux modes de fonctionnement qui concernent le rejet des paquets de données.

11. Noeud de commutation pour un réseau de communication destiné au transport de paquets de données, comportant au moins un dispositif de mémorisation intermédiaire de paquets de données, comportant une mémoire tampon (MEM) dans laquelle sont créées plusieurs files d'attente logiques (QU1, QU2) pour la mémorisation intermédiaire de paquets de données, comportant un dispositif d'écriture (WR) qui est conçu de manière à insérer un paquet de données arrivant (D1, D2, D3) dans l'une des files d'attente logiques (QU1, QU2) en fonction des informations (P1, P2) qui le caractérisent et comportant un serveur (SER) pour extraire les paquets de données des files d'attente logiques (QU1, QU2),
**caractérisé en ce que** le dispositif est muni d'un dispositif de gestion de la mémoire (MCONTR) destiné à gérer les files d'attente logiques (QU1, QU2), lequel est conçu de manière à affecter les cases mémoire à chacune des files d'attente logiques (QU1, QU2) de manière dynamique seulement en cas de besoin, que le dispositif de gestion de la mémoire (MCONTR) est muni d'un dispositif destiné à déterminer la longueur totale (n) de toutes les files d'attente logiques (QU1, QU2) et que le dispositif d'écriture (WR) est muni d'un dispositif de contrôle d'accès (ZUG) destiné à rejeter les paquets de données, lequel est conçu de manière à ce qu'une valeur de comparaison (S1, S2) soit affectée à chaque file d'attente logique et que la longueur totale (n) déterminée de toutes les files d'attente logiques (QU1, QU2) est comparée avec les valeurs de comparaison (S1, S2) affectées à chacune des files d'attente logiques (QU1, QU2), et que le dispositif de contrôle d'accès (ZUG) est en outre conçu de telle manière que pour prendre la décision du rejet des paquets de données il lie les résultats de ces comparaison avec des données qui fournissent une information sur la file d'attente logique (QU1, QU2) à laquelle est affecté un paquet de données arrivant (D1, D2, D3).
